# EUROPÄISCHE PATENTANMELDUNG

(11) **EP 1 767 347 A1**
(43) Veröffentlichungstag der Anmeldung: **28.03.2007**
(21) Anmeldenummer: 05405561.1
(22) Anmeldetag: 27.09.2005
(51) Int. Cl.: B32B 27/32

(54) **Deckfolie für Blisterverpackungen**

(71) Anmelder: Alcan Technology & Management Ltd., 8212 Neuhausen am Rheinfall (CH); GLAXO GROUP LIMITED, Greenford, Middlesex UB6 0NN (GB)
(72) Erfinder: Pasbrig, Erwin, 78224 Singen (DE); Claessens, Peter, 78244 Gottmadingen (DE); Walker, Richard Ian, Ware, Hertforshire, SG12 0DP (GB)

(57) **Zusammenfassung**

Eine ein- und weiterreissfeste, peelbare Deckfolie für thermo- und kaltgeformte Bodenteile mit wenigstens einem Behälter zur Verpackung von pharmazeutischen und medizinischen Produkten ist ein aus vier Schichten A, B, C und D aufgebautes Laminat mit der Schichtfolge A-B-C-D. Die Schichten sind wie folgt aufgebaut:
- Schicht A: Papier, Aluminiumfolie, Kunststofffilm mit einer Temperaturbeständigkeit von wenigstens 1 Sekunde bei 220 °C, Lack mit einer Temperaturbeständigkeit von wenigstens 1 Sekunde bei 220 °C oder Antihaftbeschichtung
- Schicht B: Folie, bestehend aus wenigstens zwei durch Kaschieren oder Heisskalandrieren im Winkel versetzt verbundenen, nicht-, mono- oder biaxial orientierten Kunststofffilmen, Kunststoffschicht mit netzartiger Struktur, Vlies aus einem Kunststoff, Folie, bestehend aus wenigstens einem Fasern oder ein netzartiges Gewebe aufweisenden Kunststofffilm, Film aus Polysulfon, PEN, Polyphenylsulfon, Polyimid oder Polyetherimid, mehrlagige Folie, bestehend aus wenigstens zwei der vorstehend genannten Folien bzw. Materialien
- Schicht C: Aluminiumfolie
- Schicht D: Heisssiegelschicht

Die Schichten A und B sowie die Schichten B und C sind zur Erzielung einer Haftfestigkeit von mindestens 2 N/15 mm über Kaschiermittel verbunden.

## Beschreibung

Die Erfindung betrifft eine ein- und weiterreissfeste, peelbare Deckfolie für thermo- und kaltgeformte Bodenteile mit wenigstens einem Behälter zur Verpackung von pharmazeutischen und medizinischen Produkten.

Bei Verpackungssystemen mit peelbarer Öffnung kann beim Entfemen der Deckfolie eine Spaltung des Laminats eintreten oder das Laminat kann einreissen. Die Ursache hierfür ist beispielsweise ein schlechter Schnitt einer Perforation, eine mechanische Verletzung von Kanten im Verpackungsprozess, eine Schädigung der Folie durch den Siegelprozess, wie z. B. die Einsiegelung von Produktrückständen oder Abrieb, die Ausführung der Siegelgeometrie oder Druck- und Temperaturunterschiede im Siegelwerkzeug.

Tritt eines der vorgenannten Probleme auf, kann das Füllgut nicht oder nur nach Manipulation entnommen werden. Bei offenen Systemen, wie z. B. Blister, ist dies nicht so problematisch, da der Benutzer das Problem erkennt. Bei Spendersystemen mit peelbarer Öffnung, in denen beispielsweise Pulver oder Aerosole zur Inhalation verpackt sind und es keine Kontrolle über die wirksame Entleerung gibt, müssen Öffnung und Entnahme sichergestellt sein.

Peelbare Deckfolien zur Verpackung von pharmazeutischen und medizinischen Produkten mit Schutzfunktion gegen Feuchtigkeit, Gase und Licht haben üblicherweise folgenden Aufbau:
- Lack / Aluminiumfolie, >30 µm / Siegelschicht
- Papier, 40-50 g/m² / Aluminiumfolie, 20-30 µm /Siegelschicht
- OPA- oder PET-Film, 12-25 µm / Aluminiumfolie, 20-25 µm / Siegelschicht
- Papier, 40-50 g/m² / oPA- oder PET-Film, 12-25 µm / Al-Folie, 20-25 µm / Siegelschicht

Ausführungen mit Kunststofffilmen, auch in Kombination mit Papier, wie bei den kindergesicherten Ausführungen in den USA, erschweren zwar die Einreissbarkeit der Deckfolien beim Öffnen, eine zuverlässige Funktionsfähigkeit ist jedoch nicht gewährleistet. Die Annahme, dass eine Kombination von Einzelmaterialien mit hoher Ein- und Weiterreissfestigkeit ein Laminat mit der Summe der Eigenschaften der Einzelmaterialien ergibt, bestätigt sich nicht.

Der Erfindung liegt die Aufgabe zugrunde, eine Deckfolie der eingangs genannten Art zu schaffen, welche gegenüber Deckfolien nach dem Stand der Technik eine verminderte Anfälligkeit gegen Ein- und Weiterreissen beim Öffnen von mit der Deckfolie verschlossenen Behältern, wie z. B. Blister, aufweist.

Zur erfindungsgemässen Lösung der Aufgabe führt, dass die Deckfolie ein aus vier Schichten A, B, C und D aufgebautes Laminat mit der Schichtfolge A-B-C-D ist und die Schichten wie folgt aufgebaut sind:
- Schicht A: Papier, Aluminiumfolie, Kunststofffilm mit einer Temperaturbeständigkeit von wenigstens 1 Sekunde bei 220 °C, Lack mit einer Temperaturbeständigkeit von wenigstens 1 Sekunde bei 220 °C oder Antihaftbeschichtung
- Schicht B: Folie, bestehend aus wenigstens zwei durch Kaschieren oder Heisskalandrieren im Winkel versetzt verbundenen, nicht-, mono- oder biaxial orientierten Kunststofffilmen, Kunststoffschicht mit netzartiger Struktur, Vlies aus einem Kunststoff, Folie, bestehend aus wenigstens einem Fasern oder ein netzartiges Gewebe aufweisenden Kunststofffilm, Film aus Polysulfon, PEN, Polyphenylsulfon, Polyimid oder Polyetherimid, mehrlagige Folie, bestehend aus wenigstens zwei der vorstehend genannten Folien bzw. Materialien
- Schicht C: Aluminiumfolie
- Schicht D: Heisssiegelschicht
wobei die Schichten A und B sowie die Schichten B und C zur Erzielung einer Haftfestigkeit von mindestens 2 N/15 mm über Kaschiermittel verbunden sind.

Die Kaschiermittel werden so gewählt, dass bei der peelbaren Öffnung keine Delamination des Laminats auftritt. Als Kaschiermittel dienen z. B.
- wässrige, losemittelfreie oder lösemittelbasierte Ein- oder Mehrkomponenten-Klebstoffsysteme, oder
- Extrusionsharze als Monoschicht oder coextrudiert.

Überraschenderweise wurde gefunden, dass die Kombination von Einzelmaterialien mit unterschiedlichen physikalischen und speziell mechanischen Eigenschaften längs und quer zur Maschinenrichtung zusammen mit der Trägerschicht aus Aluminium und dem Heisssiegelmedium zur Lösung der Aufgabe führen.

Die Schichten A bis D haben die folgenden Funktionen:
- Schicht A: Vermeidung des Anklebens des Laminats am Siegelwerkzeug
- Schicht B: Vermeidung des Ein- und Weiterreissens der Deckfolie beim Öffnen
- Schicht C: Träger mit Barrierewirkung gegen Feuchtigkeit, Gase und Licht
- Schicht D: Siegelschicht zur peelbaren Öffnung

Das Papier der Schicht A kann unbehandelt, gestrichen oder satiniert sein und ein Flächengewicht von 15 bis 100 g/m², vorzugsweise 20 bis 50 g/m², aufweisen.

Die Aluminiumfolie der Schicht A weist bevorzugt eine Dicke von 6 bis 60 µm, vorzugsweise 7 bis 25 µm, auf.

Der temperaturbeständige Kunststofffilm der Schicht A weist bevorzugt eine Dicke von 12 bis 25 µm, vorzugsweise 7 bis 25 µm, auf.

Der temperaturbeständige Kunststofffilm der Schicht A besteht beispielsweise aus Polyethylenterephthalat (PET), orientiertem Polyamid (oPA), Polysulfon (PSU), Polyphenylsulfon (PPSU), Polyaryletherketon (PEEK), Polyimid (PI), oder Polyetherimid (PEI) und weist bevorzugt eine Dicke von 12 bis 25 µm, vorzugsweise 7 bis 25 µm, auf.

Die zur Bildung der Folie der Schicht B eingesetzten Kunststofffilme bestehen beispielsweise aus Polyethylen (PE), insbesondere VLDPE, LLDPE, LMDPE, LDPE oder HDPE, Polypropylen (PP), Polyester, Polyamid (PA), Polystyrol (PS), halogenhaltigen Kunststoffen, insbesondere Polyvinylchlorid (PVC), Polyvinylidenchlorid (PVDC) oder Polychlortetrafluorethylen (PCTFE), Polyacrylnitril (PAN) oder aus einer Kombination der vorgenannten Kunststoffe und weisen bevorzugt eine Dicke von 8 bis 200 µm, vorzugsweise 12 bis 100 µm, auf.

Die Kunststoffschicht der netzartigen Struktur der Schicht B besteht bevorzugt aus Polyethylen (PE), insbesondere VLDPE, LLDPE, LMDPE, LDPE oder HDPE, Polypropylen (PP), Polyester, Polyamid (PA), halogenhaltigen Kunststoffen, insbesondere Polyvinylchlorid (PVC), Polyvinylidenchlorid (PVDC) oder Polychlortetrafluorethylen (PCTFE), oder aus Eiweiss (Seide) und weist bevorzugt ein Flächengewicht von 30 bis 150 g/m², vorzugsweise 40 bis 120 g/m², auf.

Das Vlies der Schicht B besteht beispielsweise aus HDPE (z. B. Tyvec^{©}), Polyester (z. B. Spunbond^{©} oder Evolon^{©}) , Polyethylenterephthalat (PET) / Polybutylenterephthalat (PBT) mit Polyamid 6 oder Polyamid 6.6, Polyester mit Polyolefinen, insbesondere PET mit PP oder Polyamid mit Polyolefinen und weist bevorzugt ein Flächengewicht von 10 bis 120 g/m² auf.

Die Folie, bestehend aus wenigstens einem Fasern oder ein netzartiges Gewebe aufweisenden Kunststofffilm der Schicht B besteht beispielsweise aus Polyethylen (PE), insbesondere VLDPE, LLDPE, LMDPE, LDPE oder HDPE, Polypropylen (PP), Polyester, Polyamid (PA), Polystyrol (PS), halogenhaltigen Kunststoffen, insbesondere Polyvinylchlorid (PVC), Polyvinylidenchlorid (PVDC) oder Polychlortetrafluorethylen (PCTFE), Polyacrylnitril (PAN) oder aus einer Kombination der vorgenannten Kunststoffe und weist bevorzugt eine Dicke von 8 bis 200 µm, vorzugsweise 12 bis 80 µm, auf.

Die einzelnen Folien der mehrlagigen Folie der Schicht B bestehen beispielsweise aus Polyethylen (PE), insbesondere VLDPE, LLDPE, LMDPE, LDPE oder HDPE, Polypropylen (PP), Polyester, Polyamid (PA), Polystyrol (PS), halogenhaltigen Kunststoffen, insbesondere Polyvinylchlorid (PVC), Polyvinylidenchlorid (PVDC) oder Polychlortetrafluorethylen (PCTFE), Polyacrylnitril (PAN) oder aus einer Kombination der vorgenannten Kunststoffe und weisen eine Dicke von 8 bis 200 µm, vorzugsweise 12 bis 75 µm, auf.

Die Aluminiumfolie der Schicht C weist bevorzugt eine Dicke von 7 bis 60 µm, vorzugsweise 9 bis 30 µm, auf.

Als Heisssiegelmedium dienen Lacke, Kunststofffolien und Beschichtungen, die eine dichte Versiegelung der Deckfolie gegen die Innenseite des Bodenmaterials und gleichzeitig das Entfernen der Deckfolie durch Peelen Ermöglichen.

Es sei hier noch erwähnt, dass sowohl die Deckfolie als auch die Bodenfolie bedruckt sein können.

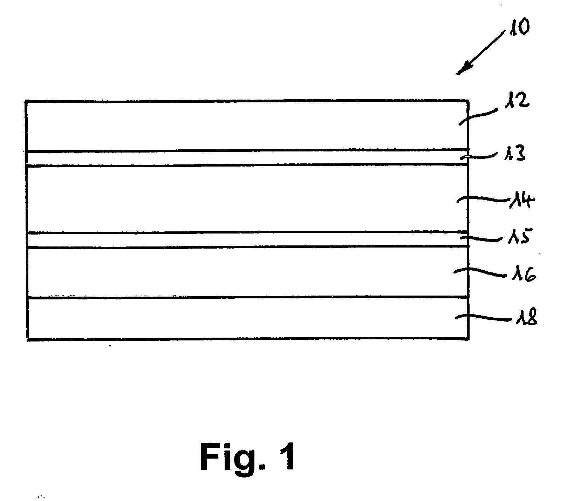

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen Querschnitt durch eine Deckfolie.

Eine in Fig. 1 gezeigte Deckfolie 10 für eine in der Zeichnung nicht wiedergegebene Blisterpackung weist von aussen nach innen den folgenden Schichtaufbau auf:
- 12: Schicht A, z. B. mit einer Bedruckung versehenes satiniertes Papier der mit einem Flächengewicht von 30 g/m²
- 13: Kaschiermittel
- 14: Schicht B, z. B. Vlies aus HDPE mit einem Flächengewicht von 60 g/m²
- 15: Kaschiermittel
- 16: Schicht C, z. B. 25 µm dicke Aluminiumfolie
- 18: Schicht D, z. B. Heisssiegellack

## Patentansprüche

1. Ein- und weiterreissfeste, peelbare Deckfolie für thermo- und kaltgeformte Bodenteile mit wenigstens einem Behälter zur Verpackung von pharmazeutischen und medizinischen Produkten,
**dadurch gekennzeichnet, dass**
die Deckfolie ein aus vier Schichten A, B, C und D aufgebautes Laminat mit der Schichtfolge A-B-C-D ist und die Schichten wie folgt aufgebaut sind:
- Schicht A:
Papier, oder
Aluminiumfolie, oder
Kunststofffilm mit einer Temperaturbeständigkeit von wenigstens 1 Sekunde bei 220 °C, oder
Lack mit einer Temperaturbeständigkeit von wenigstens 1 Sekunde bei 220 °C, oder
Antihaftbeschichtung
- Schicht B:
Folie, bestehend aus wenigstens zwei durch Kaschieren oder Heisskalandrieren im Winkel versetzt verbundenen, nicht-, mono- oder biaxial orientierten Kunststofffilmen, oder
Kunststoffschicht mit netzartiger Struktur, oder
Vlies aus einem Kunststoff, oder
Folie, bestehend aus wenigstens einem Fasern oder ein netzartiges Gewebe aufweisenden Kunststofffilm, oder
Film aus Polysulfon, Polyethylennaphthalat (PEN), Polyphenylsulfon (PPSU), Polyimid (PI) oder Polyetherimid (PEI), oder
mehrlagige Folie, bestehend aus wenigstens zwei der vorstehend genannten Folien bzw. Materialien
- Schicht C:
Aluminiumfolie
- Schicht D:
Heisssiegelschicht
wobei die Schichten A und B sowie die Schichten B und C zur Erzielung einer Haftfestigkeit von mindestens 2 N/15 mm über Kaschiermittel verbunden sind.

2. Deckfolie nach Anspruch 1, **dadurch gekennzeichnet, dass** das Papier der Schicht A unbehandelt, gestrichen oder satiniert ist und ein Flächengewicht von 15 bis 100 g/m², vorzugsweise 20 bis 50 g/m², aufweist.

3. Deckfolie nach Anspruch 1, **dadurch gekennzeichnet, dass** die Aluminiumfolie der Schicht A eine Dicke von 6 bis 60 µm, vorzugsweise 7 bis 25 µm, aufweist.

4. Deckfolie nach Anspruch 1, **dadurch gekennzeichnet, dass** der temperaturbeständige Kunststofffilm der Schicht A eine Dicke von 12 bis 25 µm, vorzugsweise 7 bis 25 µm, aufweist.

5. Deckfolie nach Anspruch 1, **dadurch gekennzeichnet, dass** der temperaturbeständige Kunststofffilm der Schicht A aus Polyethylenterephthalat (PET), orientiertem Polyamid (oPA), Polysulfon (PSU), Polyphenylsulfon (PPSU), Polyaryletherketon (PEEK), Polyimid (PI), Polyetherimid (PEI) besteht und eine Dicke von 12 bis 25 µm, vorzugsweise 7 bis 25 µm, aufweist.

6. Deckfolie nach Anspruch 1, **dadurch gekennzeichnet, dass** die zur Bildung der Folie der Schicht B eingesetzten Kunststofffilme aus Polyethylen (PE), insbesondere VLDPE, LLDPE, LMDPE, LDPE oder HDPE, Polypropylen (PP), Polyester, Polyamid (PA), Polystyrol (PS), halogenhaltigen Kunststoffen, insbesondere Polyvinylchlorid (PVC), Polyvinylidenchlorid (PVDC) oder Polychlortetrafluorethylen (PCTFE), Polyacrylnitril (PAN) oder aus Kombinationen der vorgenannten Kunststoffe bestehen und eine Dicke von 8 bis 200 µm, vorzugsweise 12 bis 100 µm, aufweisen.

7. Deckfolie nach Anspruch 1, **dadurch gekennzeichnet, dass** die Kunststoffschicht der netzartigen Struktur der Schicht B aus Polyethylen (PE), insbesondere VLDPE, LLDPE, LMDPE, LDPE oder HDPE, Polypropylen (PP), Polyester, Polyamid (PA), halogenhaltigen Kunststoffen, insbesondere Polyvinylchlorid (PVC), Polyvinylidenchlorid (PVDC) oder Polychlortetrafluorethylen (PCTFE), oder aus Eiweiss (Seide) bestehen und ein Flächengewicht von 30 bis 150 g/m², vorzugsweise 40 bis 120 g/m², aufweist.

8. Deckfolie nach Anspruch 1, **dadurch gekennzeichnet, dass** das Vlies der Schicht B aus HDPE, Polyester, PET/Polybutylenterephthalat (PBT) mit Polyamid 6 oder Polyamid 6.6, Polyester mit Polyolefinen, insbesondere PET mit PP oder Polyamid mit Polyolefinen bestehen und ein Flächengewicht von 10 bis 120 g/m² aufweist.

9. Deckfolie nach Anspruch 1, **dadurch gekennzeichnet, dass** die Folie, bestehend aus wenigstens einem Fasern oder ein netzartiges Gewebe aufweisenden Kunststofffilm der Schicht B aus Polyethylen (PE), insbesondere VLDPE, LLDPE, LMDPE, LDPE oder HDPE, Polypropylen (PP), Polyester, Polyamid (PA), Polystyrol (PS), halogenhaltigen Kunststoffen, insbesondere Polyvinylchlorid (PVC), Polyvinylidenchlorid (PVDC) oder Polychlortetrafluorethylen (PCTFE), Polyacrylnitril (PAN) oder aus Kombinationen der vorgenannten Kunststoffe bestehen und eine Dicke von 8 bis 200 µm, vorzugsweise 12 bis 80 µm, aufweisen.

10. Deckfolie nach Anspruch 1, **dadurch gekennzeichnet, dass** die einzelnen Folien der mehrlagigien Folie der Schicht B aus Polyethylen (PE), insbesondere VLDPE, LLDPE, LMDPE, LDPE oder HDPE, Polypropylen (PP), Polyester, Polyamid (PA), Polystyrol (PS), halogenhaltigen Kunststoffen, insbesondere Polyvinylchlorid (PVC), Polyvinylidenchlorid (PVDC) oder Polychlortetrafluorethylen (PCTFE), Polyacrylnitril (PAN) oder aus Kombinationen der vorgenannten Kunststoffe bestehen und eine Dicke von 8 bis 200 µm, vorzugsweise 12 bis 75 µm, aufweisen.

11. Deckfolie nach Anspruch 1, **dadurch gekennzeichnet, dass** die Aluminiumfolie der Schicht C eine Dicke von 7 bis 60 µm, vorzugsweise 9 bis 30 µm, aufweist.

12. Blisterverpackung mit einem Blisterbodenteil und einer gegen das Blisterbodentell gesiegelten Deckfolie nach einem der vorangehenden Ansprüche.
